# EUROPEAN PATENT SPECIFICATION

(11) **EP 3 984 154 B1**
(45) Date of publication and mention of the grant of the patent: **25.02.2026**
(21) Application number: 20751780.6
(22) Date of filing: 12.06.2020
(51) Int. Cl.: H04L 1/08, H04L 1/18

(54) **DOWNLINK DECODING FEEDBACK FOR HYBRID AUTOMATIC REPEAT REQUEST-LESS TRANSMISSION MODES**
DOWNLINK-DECODIERRÜCKKOPPLUNG FÜR ÜBERTRAGUNGSMODI OHNE HYBRIDE AUTOMATISCHE WIEDERHOLUNGSANFRAGEN
RÉTROACTION DE DÉCODAGE DE LIAISON DESCENDANTE POUR MODES DE TRANSMISSION SANS DEMANDE DE RÉPÉTITION AUTOMATIQUE HYBRIDE

(30) Priority: 14.06.2019 US 201962861806 P; 11.06.2020 US 202016899421
(43) Date of publication of application: 20.04.2022
(73) Proprietor: QUALCOMM Incorporated, San Diego, California 92121-1714 (US)
(72) Inventor: WANG, Xiao Feng, San Diego, California 92121 (US); XU, Huilin, San Diego, California 92121 (US); MA, Jun, San Diego, California 92121 (US); SAKHNINI, Iyab Issam, San Diego, California 92121 (US); ZHANG, Dan, San Diego, California 92121 (US)
(74) Representative: Bardehle Pagenberg Partnerschaft mbB Patentanwälte Rechtsanwälte
(86) International application number: PCT/US2020/037509
(87) International publication number: WO 2020/252322

(56) References cited:
- HUAWEI ET AL: "Discussion on disabling HARQ in NTN", vol. RAN WG2, no. Reno, USA; 20190513 - 20190517, 13 May 2019 (2019-05-13), XP051731269, Retrieved from the Internet <URL:http://www.3gpp.org/ftp/Meetings%5F3GPP%5FSYNC/RAN2/Docs/R2%2D1907842%2Ezip> [retrieved on 20190513]
- FRAUNHOFER HHI ET AL: "Sidelink Design for Unicast and Groupcast", 12 October 2018 (2018-10-12), pages 1 - 6, XP051517891, Retrieved from the Internet <URL:http://www.3gpp.org/ftp/tsg%5Fran/WG1%5FRL1/TSGR1%5F94b/Docs/R1%2D1810483%2Ezip>

## Description

### FIELD OF THE DISCLOSURE

Aspects of the present disclosure generally relate to wireless communication and to techniques and apparatuses for downlink decoding feedback for hybrid automatic repeat request-less transmission modes.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, and/or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless communication network may include a number of base stations (BSs) that can support communication for a number of user equipment (UEs). A user equipment (UE) may communicate with a base station (BS) via the downlink and uplink. The downlink (or forward link) refers to the communication link from the BS to the UE, and the uplink (or reverse link) refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, and/or the like.
Huawei et al.: "Discussion on disabling HARQ in NTN", 3GPP Draft, R2-1907842, 2019, relates to a discussion on disabling HARQ in NTN and discloses that retransmissions at one or several layers shall be supported for NTN and configurable by the network. The document further relates to the concept of disabling HARQ and teaches that no reassembling or reordering procedure is needed in disabled HARQ. Associated timers can be disabled by setting the value to 0 or by not configuring them at all: t-reordering.
Fraunhofer HHI et al.: "Sidelink Design for Unicast and Groupcast", 3GPP Draft, R1-1810483, 2018, relates to sidelink design for unicast and groupcast and to HARQ-less repetition for NR V2X mode. In this context, it discloses that explicit HARQ-ACK feedback can be used to reduce the interference and collision probability on the sidelink channel.

The above multiple access technologies have been adopted in various telecommunication standards to provide a common protocol that enables different user equipment to communicate on a municipal, national, regional, and even global level. New Radio (NR), which may also be referred to as 5G, is a set of enhancements to the LTE mobile standard promulgated by the Third Generation Partnership Project (3GPP). NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. However, as the demand for mobile broadband access continues to increase, there exists a need for further improvements in LTE and NR technologies. Preferably, these improvements should be applicable to other multiple access technologies and the telecommunication standards that employ these technologies.

### SUMMARY

The invention is defined by the appended claims.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a block diagram conceptually illustrating an example of a wireless communication network, in accordance with various aspects of the present disclosure.
Fig. 2 is a block diagram conceptually illustrating an example of a base station in communication with a UE in a wireless communication network, in accordance with various aspects of the present disclosure.
Fig. 3A is a block diagram conceptually illustrating an example of a frame structure in a wireless communication network, in accordance with various aspects of the present disclosure.
Fig. 3B is a block diagram conceptually illustrating an example synchronization communication hierarchy in a wireless communication network, in accordance with various aspects of the present disclosure.
Fig. 4 is a block diagram conceptually illustrating an example slot format with a normal cyclic prefix, in accordance with various aspects of the present disclosure.
Fig. 5 illustrates an example logical architecture of a distributed radio access network (RAN), in accordance with various aspects of the present disclosure.
Fig. 6 illustrates an example physical architecture of a distributed RAN, in accordance with various aspects of the present disclosure.
Fig. 7 is a diagram illustrating an example of downlink decoding feedback for HARQ-less transmission, in accordance with various aspects of the present disclosure.
Fig. 8 is a diagram illustrating an example process performed, for example, by a user equipment, in accordance with various aspects of the present disclosure.
Fig. 9 is a diagram illustrating an example process performed, for example, by a user equipment, in accordance with various aspects of the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, and/or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with 3G and/or 4G wireless technologies, aspects of the present disclosure can be applied in other generation-based communication systems, such as 5G, including NR technologies.

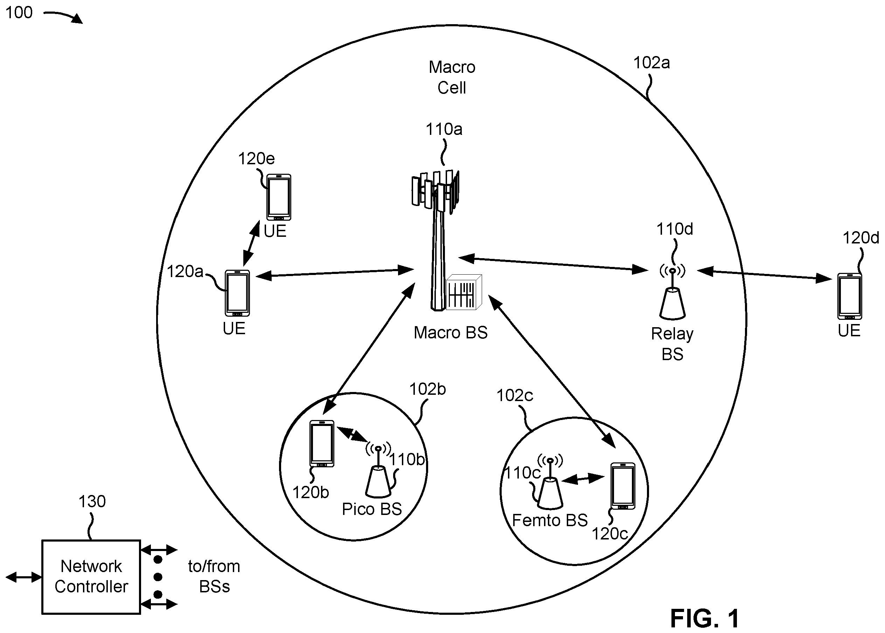

Fig. 1 is a diagram illustrating a wireless network 100 in which aspects of the present disclosure may be practiced. The wireless network 100 may be an LTE network or some other wireless network, such as a 5G or NR network. The wireless network 100 may include a number of BSs 110 (shown as BS 110a, BS 110b, BS 110c, and BS 110d) and other network entities. A BS is an entity that communicates with user equipment (UEs) and may also be referred to as a base station, a NR BS, a Node B, a gNB, a 5G node B (NB), an access point, a transmit receive point (TRP), and/or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces such as a direct physical connection, a virtual network, and/or the like using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay station 110d may communicate with macro BS 110a and a UE 120d in order to facilitate communication between BS 110a and UE 120d. A relay station may also be referred to as a relay BS, a relay base station, a relay, and/or the like.

Wireless network 100 may be a heterogeneous network that includes BSs of different types, e.g., macro BSs, pico BSs, femto BSs, relay BSs, and/or the like. These different types of BSs may have different transmit power levels, different coverage areas, and different impacts on interference in wireless network 100. For example, macro BSs may have a high transmit power level (e.g., 5 to 40 Watts) whereas pico BSs, femto BSs, and relay BSs may have lower transmit power levels (e.g., 0.1 to 2 Watts).

A network controller 130 may couple to a set of BSs and may provide coordination and control for these BSs. Network controller 130 may communicate with the BSs via a backhaul. The BSs may also communicate with one another, e.g., directly or indirectly via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, and/or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, location tags, and/or the like, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components, memory components, and/or the like.

In general, any number of wireless networks may be deployed in a given geographic area. Each wireless network may support a particular RAT and may operate on one or more frequencies. A RAT may also be referred to as a radio technology, an air interface, and/or the like. A frequency may also be referred to as a carrier, a frequency channel, and/or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol, a vehicle-to-infrastructure (V2I) protocol, and/or the like), a mesh network, and/or the like. In this case, the UE 120 may perform scheduling operations, resource selection operations, and/or other operations described elsewhere herein as being performed by the base station 110.

As indicated above, Fig. 1 is provided as an example. Other examples may differ from what is described with regard to Fig. 1.

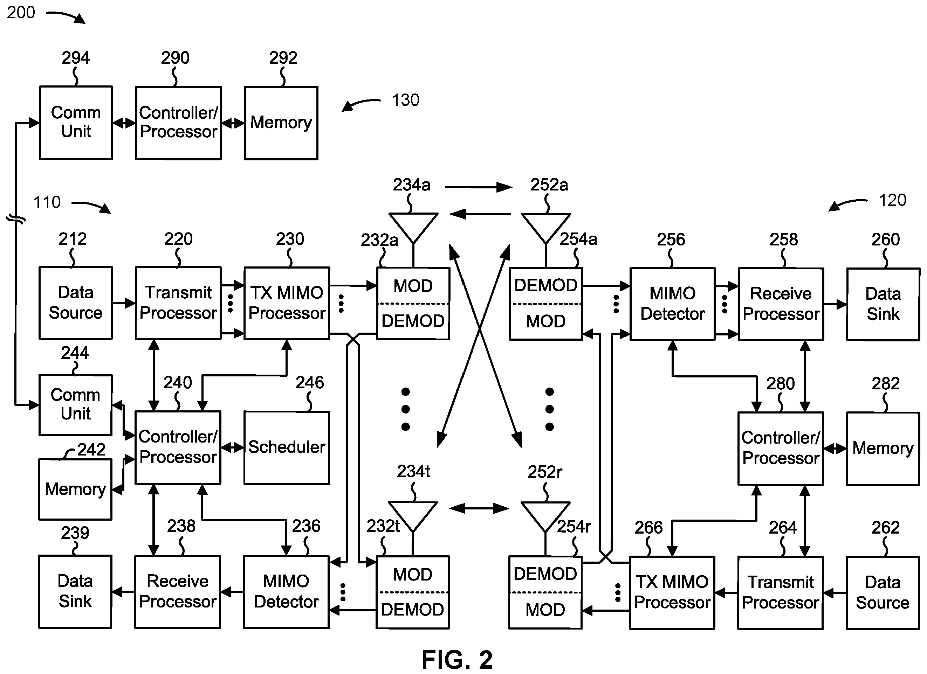

Fig. 2 shows a block diagram of a design 200 of base station 110 and UE 120, which may be one of the base stations and one of the UEs in Fig. 1. Base station 110 may be equipped with T antennas 234a through 234t, and UE 120 may be equipped with R antennas 252a through 252r, where in general T ≥ 1 and R ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI) and/or the like) and control information (e.g., CQI requests, grants, upper layer signaling, and/or the like) and provide overhead symbols and control symbols. Transmit processor 220 may also generate reference symbols for reference signals (e.g., the cell-specific reference signal (CRS)) and synchronization signals (e.g., the primary synchronization signal (PSS) and secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide T output symbol streams to T modulators (MODs) 232a through 232t. Each modulator 232 may process a respective output symbol stream (e.g., for OFDM and/or the like) to obtain an output sample stream. Each modulator 232 may further process (e.g., convert to analog, amplify, filter, and upconvert) the output sample stream to obtain a downlink signal. T downlink signals from modulators 232a through 232t may be transmitted via T antennas 234a through 234t, respectively. According to various aspects described in more detail below, the synchronization signals can be generated with location encoding to convey additional information.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM and/or the like) to obtain received symbols. A MIMO detector 256 may obtain received symbols from all R demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. A channel processor may determine reference signal received power (RSRP), received signal strength indicator (RSSI), reference signal received quality (RSRQ), channel quality indicator (CQI), and/or the like. In some aspects, one or more components of UE 120 may be included in a housing.

On the uplink, at UE 120, a transmit processor 264 may receive and process data from a data source 262 and control information (e.g., for reports comprising RSRP, RSSI, RSRQ, CQI, and/or the like) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM, CP-OFDM, and/or the like), and transmitted to base station 110. At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Network controller 130 may include communication unit 294, controller/processor 290, and memory 292.

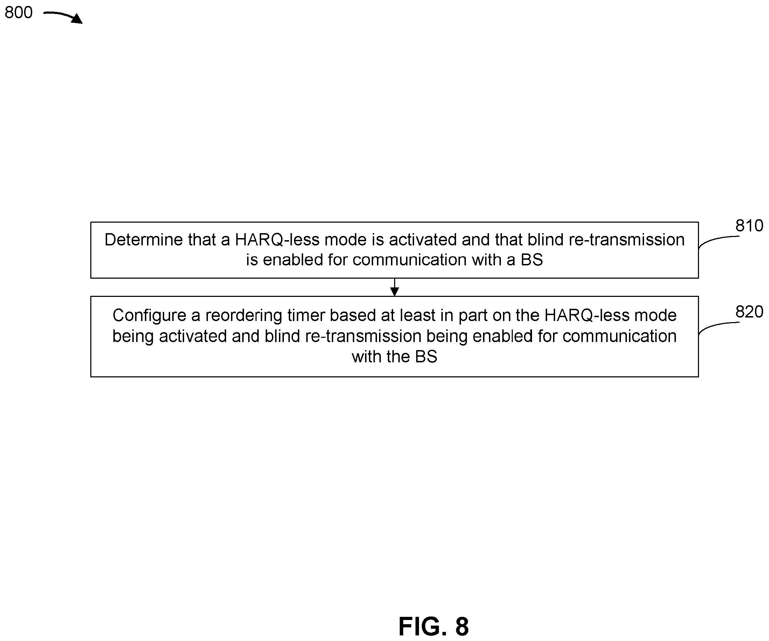

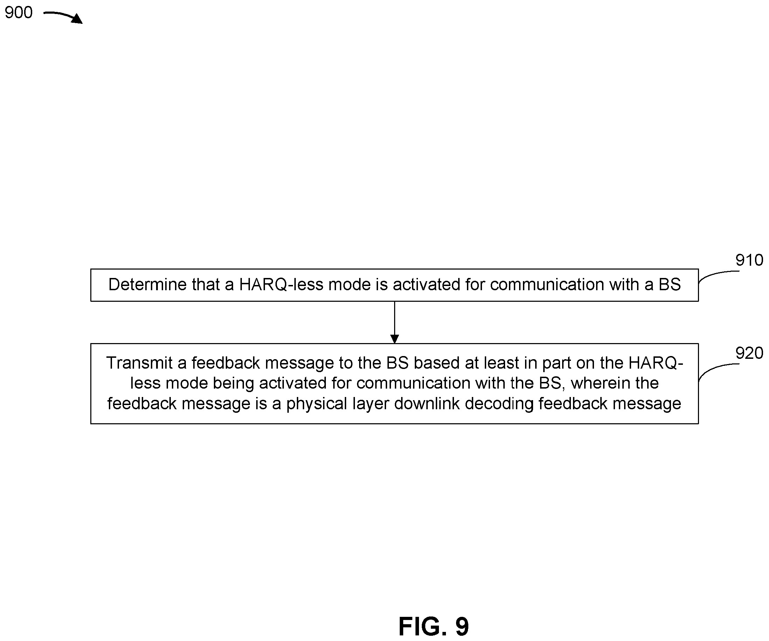

Controller/processor 240 of base station 110, controller/processor 280 of UE 120, and/or any other component(s) of Fig. 2 may perform one or more techniques associated with downlink decoding feedback for HARQ-less transmission modes, as described in more detail elsewhere herein. For example, controller/processor 240 of base station 110, controller/processor 280 of UE 120, and/or any other component(s) of Fig. 2 may perform or direct operations of, for example, process 800 of Fig. 8, process 900 of Fig. 9, and/or other processes as described herein. Memories 242 and 282 may store data and program codes for base station 110 and UE 120, respectively. In some aspects, memory 242 and/or memory 282 may comprise a non-transitory computer-readable medium storing one or more instructions for wireless communication. For example, the one or more instructions, when executed by one or more processors of the base station 110 and/or the UE 120, may perform or direction operations of, for example, process 800 of Fig. 8, process 900 of Fig. 9, and/or other processes as described herein. A scheduler 246 may schedule UEs for data transmission on the downlink and/or uplink.

In some aspects, UE 120 may include means for determining that a HARQ-less mode is activated for communication with a BS (e.g., BS 110), means for configuring a reordering timer based at least in part on the HARQ-less mode being activated for communication with the BS, and/or the like. In some aspects, UE 120 may include means for determining that a HARQ-less mode is activated for communication with a BS, means for transmitting a feedback message to the BS based at least in part on the HARQ-less mode being activated for communication with the BS, wherein the feedback message is a physical layer downlink decoding feedback message, and/or the like. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like.

As indicated above, Fig. 2 is provided as an example. Other examples may differ from what is described with regard to Fig. 2.

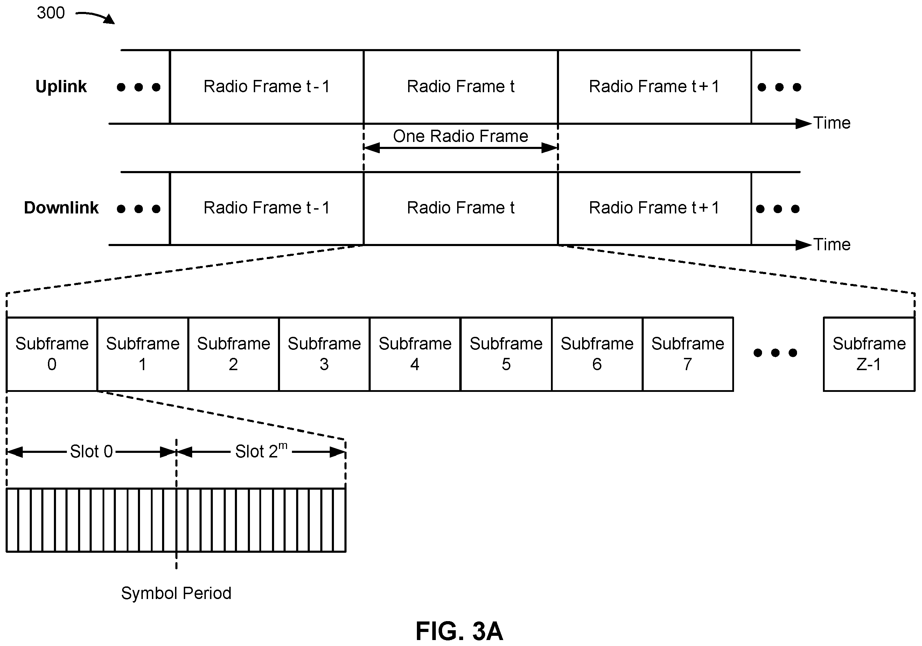

Fig. 3A shows an example frame structure 300 for frequency division duplexing (FDD) in a telecommunications system (e.g., NR). The transmission timeline for each of the downlink and uplink may be partitioned into units of radio frames (sometimes referred to as frames). Each radio frame may have a predetermined duration (e.g., 10 milliseconds (ms)) and may be partitioned into a set of Z (Z ≥ 1) subframes (e.g., with indices of 0 through Z-1). Each subframe may have a predetermined duration (e.g., 1 ms) and may include a set of slots (e.g., 2^{m} slots per subframe are shown in Fig. 3A, where m is a numerology used for a transmission, such as 0, 1, 2, 3, 4, and/or the like). Each slot may include a set of L symbol periods. For example, each slot may include fourteen symbol periods (e.g., as shown in Fig. 3A), seven symbol periods, or another number of symbol periods. In a case where the subframe includes two slots (e.g., when m = 1), the subframe may include 2L symbol periods, where the 2L symbol periods in each subframe may be assigned indices of 0 through 2L-1. In some aspects, a scheduling unit for the FDD may be frame-based, subframe-based, slot-based, symbol-based, and/or the like.

While some techniques are described herein in connection with frames, subframes, slots, and/or the like, these techniques may equally apply to other types of wireless communication structures, which may be referred to using terms other than "frame," "subframe," "slot," and/or the like in 5G NR. In some aspects, "wireless communication structure" may refer to a periodic time-bounded communication unit defined by a wireless communication standard and/or protocol. Additionally, or alternatively, different configurations of wireless communication structures than those shown in Fig. 3A may be used.

In certain telecommunications (e.g., NR), a base station may transmit synchronization signals. For example, a base station may transmit a primary synchronization signal (PSS), a secondary synchronization signal (SSS), and/or the like, on the downlink for each cell supported by the base station. The PSS and SSS may be used by UEs for cell search and acquisition. For example, the PSS may be used by UEs to determine symbol timing, and the SSS may be used by UEs to determine a physical cell identifier, associated with the base station, and frame timing. The base station may also transmit a physical broadcast channel (PBCH). The PBCH may carry some system information, such as system information that supports initial access by UEs.

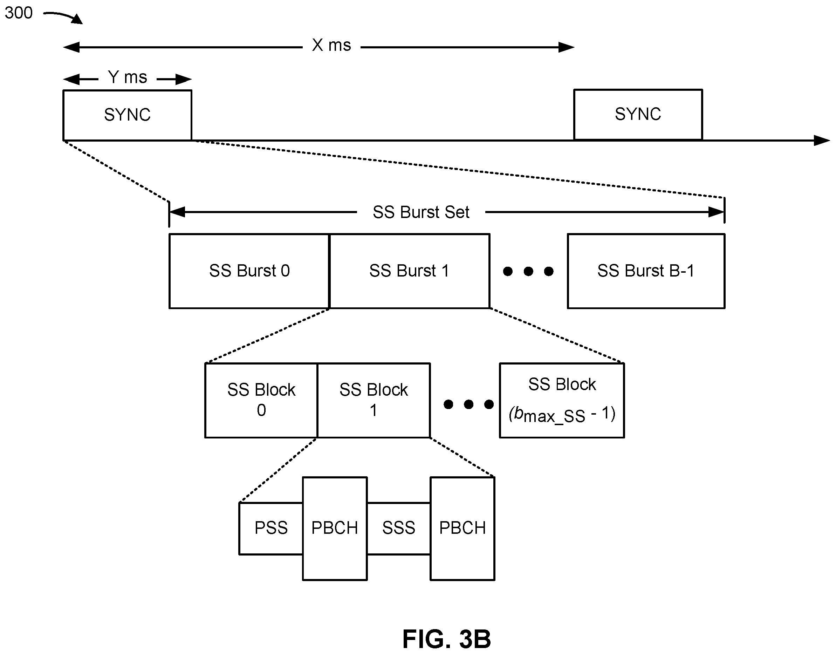

In some aspects, the base station may transmit the PSS, the SSS, and/or the PBCH in accordance with a synchronization communication hierarchy (e.g., a synchronization signal (SS) hierarchy) including multiple synchronization communications (e.g., SS blocks), as described below in connection with Fig. 3B.

Fig. 3B is a block diagram conceptually illustrating an example SS hierarchy, which is an example of a synchronization communication hierarchy. As shown in Fig. 3B, the SS hierarchy may include an SS burst set, which may include a plurality of SS bursts (identified as SS burst 0 through SS burst B-1, where B is a maximum number of repetitions of the SS burst that may be transmitted by the base station). As further shown, each SS burst may include one or more SS blocks (identified as SS block 0 through SS block (bₘₐₓ__{SS}-1), where b_{max_SS}-1 is a maximum number of SS blocks that can be carried by an SS burst). In some aspects, different SS blocks may be beam-formed differently. An SS burst set may be periodically transmitted by a wireless node, such as every X milliseconds, as shown in Fig. 3B. In some aspects, an SS burst set may have a fixed or dynamic length, shown as Y milliseconds in Fig. 3B.

The SS burst set shown in Fig. 3B is an example of a synchronization communication set, and other synchronization communication sets may be used in connection with the techniques described herein. Furthermore, the SS block shown in Fig. 3B is an example of a synchronization communication, and other synchronization communications may be used in connection with the techniques described herein.

In some aspects, an SS block includes resources that carry the PSS, the SSS, the PBCH, and/or other synchronization signals (e.g., a tertiary synchronization signal (TSS)) and/or synchronization channels. In some aspects, multiple SS blocks are included in an SS burst, and the PSS, the SSS, and/or the PBCH may be the same across each SS block of the SS burst. In some aspects, a single SS block may be included in an SS burst. In some aspects, the SS block may be at least four symbol periods in length, where each symbol carries one or more of the PSS (e.g., occupying one symbol), the SSS (e.g., occupying one symbol), and/or the PBCH (e.g., occupying two symbols).

In some aspects, the symbols of an SS block are consecutive, as shown in Fig. 3B. In some aspects, the symbols of an SS block are non-consecutive. Similarly, in some aspects, one or more SS blocks of the SS burst may be transmitted in consecutive radio resources (e.g., consecutive symbol periods) during one or more slots. Additionally, or alternatively, one or more SS blocks of the SS burst may be transmitted in non-consecutive radio resources.

In some aspects, the SS bursts may have a burst period, whereby the SS blocks of the SS burst are transmitted by the base station according to the burst period. In other words, the SS blocks may be repeated during each SS burst. In some aspects, the SS burst set may have a burst set periodicity, whereby the SS bursts of the SS burst set are transmitted by the base station according to the fixed burst set periodicity. In other words, the SS bursts may be repeated during each SS burst set.

The base station may transmit system information, such as system information blocks (SIBs) on a physical downlink shared channel (PDSCH) in certain slots. The base station may transmit control information/data on a physical downlink control channel (PDCCH) in C symbol periods of a slot, where B may be configurable for each slot. The base station may transmit traffic data and/or other data on the PDSCH in the remaining symbol periods of each slot.

As indicated above, Figs. 3A and 3B are provided as examples. Other examples may differ from what is described with regard to Figs. 3A and 3B.

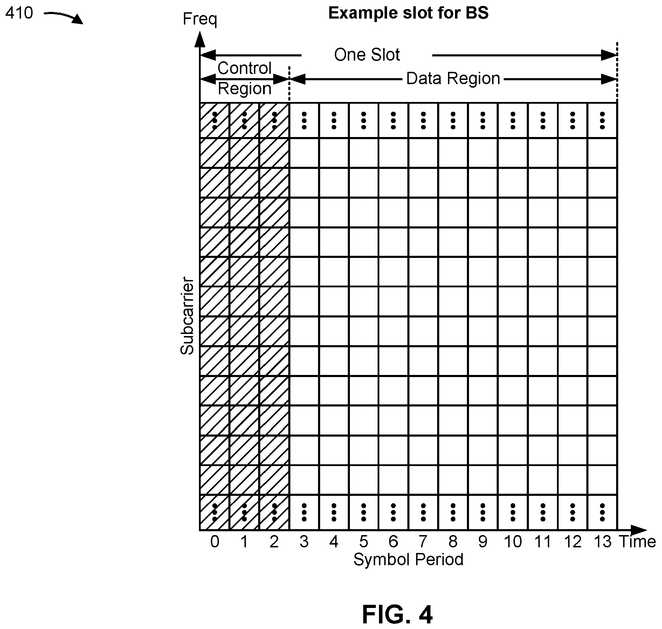

Fig. 4 shows an example slot format 410 with a normal cyclic prefix. The available time frequency resources may be partitioned into resource blocks. Each resource block may cover a set of subcarriers (e.g., 12 subcarriers) in one slot and may include a number of resource elements. Each resource element may cover one subcarrier in one symbol period (e.g., in time) and may be used to send one modulation symbol, which may be a real or complex value.

An interlace structure may be used for each of the downlink and uplink for FDD in certain telecommunications systems (e.g., NR). For example, Q interlaces with indices of 0 through Q - 1 may be defined, where Q may be equal to 4, 6, 8, 10, or some other value. Each interlace may include slots that are spaced apart by Q frames. In particular, interlace q may include slots q, q + Q, q + 2Q, etc., where q ∈ {0, ..., Q - 1}.

A UE may be located within the coverage of multiple BSs. One of these BSs may be selected to serve the UE. The serving BS may be selected based at least in part on various criteria such as received signal strength, received signal quality, path loss, and/or the like. Received signal quality may be quantified by a signal-to-noise-and-interference ratio (SNIR), or a reference signal received quality (RSRQ), or some other metric. The UE may operate in a dominant interference scenario in which the UE may observe high interference from one or more interfering BSs.

While aspects of the examples described herein may be associated with NR or 5G technologies, aspects of the present disclosure may be applicable with other wireless communication systems. New Radio (NR) may refer to radios configured to operate according to a new air interface (e.g., other than Orthogonal Frequency Divisional Multiple Access (OFDMA)-based air interfaces) or fixed transport layer (e.g., other than Internet Protocol (IP)). In aspects, NR may utilize OFDM with a CP (herein referred to as cyclic prefix OFDM or CP-OFDM) and/or SC-FDM on the uplink, may utilize CP-OFDM on the downlink and include support for half-duplex operation using time division duplexing (TDD). In aspects, NR may, for example, utilize OFDM with a CP (herein referred to as CP-OFDM) and/or discrete Fourier transform spread orthogonal frequency-division multiplexing (DFT-s-OFDM) on the uplink, may utilize CP-OFDM on the downlink and include support for half-duplex operation using TDD. NR may include Enhanced Mobile Broadband (eMBB) service targeting wide bandwidth (e.g., 80 megahertz (MHz) and beyond), millimeter wave (mmW) targeting high carrier frequency (e.g., 60 gigahertz (GHz)), massive MTC (mMTC) targeting non-backward compatible MTC techniques, and/or mission critical targeting ultra reliable low latency communications (URLLC) service.

In some aspects, a single component carrier bandwidth of 100 MHz may be supported. NR resource blocks may span 12 sub-carriers with a sub-carrier bandwidth of 60 or 120 kilohertz (kHz) over a 0.1 millisecond (ms) duration. Each radio frame may include 40 slots and may have a length of 10 ms. Consequently, each slot may have a length of 0.25 ms. Each slot may indicate a link direction (e.g., DL or UL) for data transmission and the link direction for each slot may be dynamically switched. Each slot may include DL/UL data as well as DL/UL control data.

Beamforming may be supported and beam direction may be dynamically configured. MIMO transmissions with precoding may also be supported. MIMO configurations in the DL may support up to 8 transmit antennas with multi-layer DL transmissions up to 8 streams and up to 2 streams per UE. Multi-layer transmissions with up to 2 streams per UE may be supported. Aggregation of multiple cells may be supported with up to 8 serving cells. Alternatively, NR may support a different air interface, other than an OFDM-based interface. NR networks may include entities such as central units or distributed units.

As indicated above, Fig. 4 is provided as an example. Other examples may differ from what is described with regard to Fig. 4.

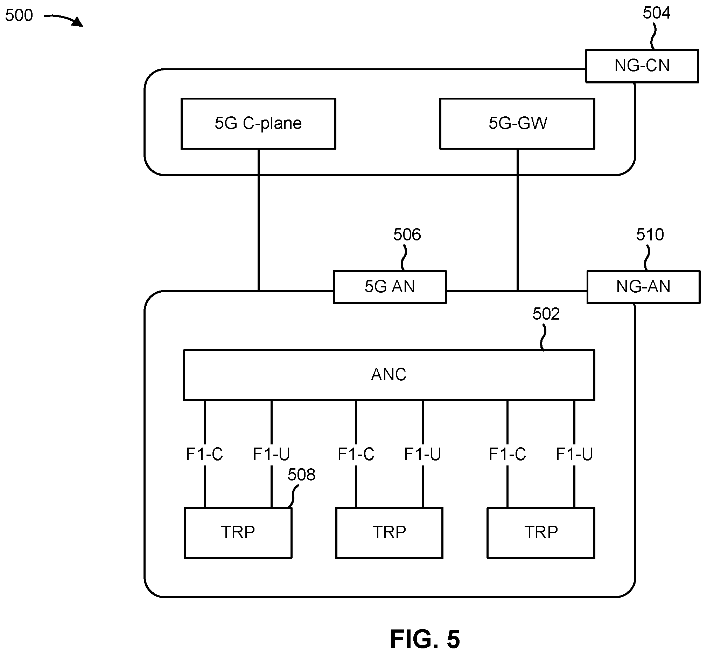

Fig. 5 illustrates an example logical architecture of a distributed RAN 500, according to aspects of the present disclosure. A 5G access node 506 may include an access node controller (ANC) 502. The ANC may be a central unit (CU) of the distributed RAN 500. The backhaul interface to the next generation core network (NG-CN) 504 may terminate at the ANC. The backhaul interface to neighboring next generation access nodes (NG-ANs) may terminate at the ANC. The ANC may include one or more TRPs 508 (which may also be referred to as BSs, NR BSs, Node Bs, 5G NBs, APs, gNB, or some other term). As described above, "TRP" may be used interchangeably with "cell."

The TRPs 508 may be a distributed unit (DU). The TRPs may be connected to one ANC (ANC 502) or more than one ANC (not illustrated). For example, for RAN sharing, radio as a service (RaaS), and service specific AND deployments, the TRP may be connected to more than one ANC. A TRP may include one or more antenna ports. The TRPs may be configured to individually (e.g., dynamic selection) or jointly (e.g., joint transmission) serve traffic to a UE.

The local architecture of RAN 500 may be used to illustrate fronthaul definition. The architecture may be defined that support fronthauling solutions across different deployment types. For example, the architecture may be based at least in part on transmit network capabilities (e.g., bandwidth, latency, and/or jitter).

The architecture may share features and/or components with LTE. According to aspects, the next generation AN (NG-AN) 510 may support dual connectivity with NR. The NG-AN may share a common fronthaul for LTE and NR.

The architecture may enable cooperation between and among TRPs 508. For example, cooperation may be preset within a TRP and/or across TRPs via the ANC 502. According to aspects, no inter-TRP interface may be needed/present.

According to aspects, a dynamic configuration of split logical functions may be present within the architecture of RAN 500. The packet data convergence protocol (PDCP), radio link control (RLC), media access control (MAC) protocol may be adaptably placed at the ANC or TRP.

According to various aspects, a BS may include a central unit (CU) (e.g., ANC 502) and/or one or more distributed units (e.g., one or more TRPs 508).

As indicated above, Fig. 5 is provided as an example. Other examples may differ from what is described with regard to Fig. 5.

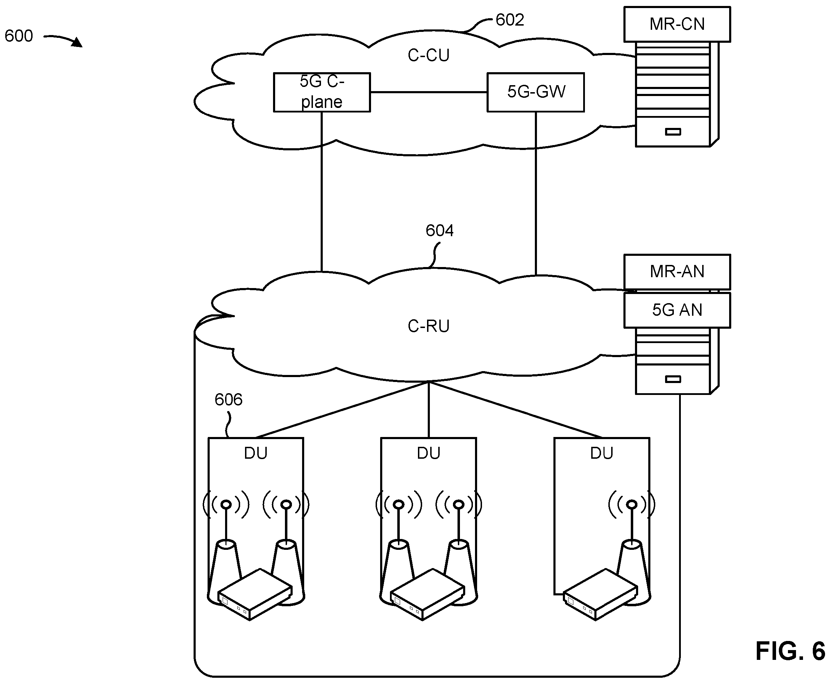

Fig. 6 illustrates an example physical architecture of a distributed RAN 600, according to aspects of the present disclosure. A centralized core network unit (C-CU) 602 may host core network functions. The C-CU may be centrally deployed. C-CU functionality may be offloaded (e.g., to advanced wireless services (AWS)), in an effort to handle peak capacity.

A centralized RAN unit (C-RU) 604 may host one or more ANC functions. Optionally, the C-RU may host core network functions locally. The C-RU may have distributed deployment. The C-RU may be closer to the network edge.

A distributed unit (DU) 606 may host one or more TRPs. The DU may be located at edges of the network with radio frequency (RF) functionality.

As indicated above, Fig. 6 is provided as an example. Other examples may differ from what is described with regard to Fig. 6.

In some communications systems, such as NR, hybrid automatic repeat (HARQ) feedback may be used to indicate whether a transmission is successfully received and/or decoded. For example, a UE may transmit a HARQ acknowledgement (ACK) to indicate that a transmission is successfully received and/or decoded. In contrast, the UE may transmit a HARQ negative acknowledgement (NACK) to indicate that a transmission is not successfully received and/or decoded. However, HARQ feedback may result in a large reception delay. Thus, HARQ-less transmission modes may be deployed, such as for non-terrestrial network (NTN) deployments (e.g., geosynchronous equatorial orbit (GEO) deployments, low-earth orbit (LEO) deployments, and/or the like). In this way, the HARQ-less transmission mode may enable a particular deployment to satisfy a delay requirement for a maximum time to combine a plurality of copies of the same transport block.

However, HARQ feedback is used to identify a disruption to downlink transmission. Without HARQ-feedback, such as in a HARQ-less transmission mode, a BS may use a transmission control protocol (TCP) feedback to identify a disruption. However, this may result in an excessive delay to identify the disruption, which may result in lost communications, wasted bandwidth, and/or the like. Furthermore, a BS may use HARQ feedback to determine a downlink decoding rate and adapt a scheduling modulation and coding scheme (MCS) to satisfy a target block error rate (BLER) requirement. Without HARQ feedback, the BS may perform downlink scheduling adaptation using channel quality indicators (CQIs), but may not be able to adjust the scheduling MCS to satisfy the target BLER.

To account for the lack of HARQ feedback in HARQ-less transmission modes, a UE and a BS may operate in a radio link control (RLC) acknowledgement mode. In the RLC acknowledgement mode, the UE may provide an RLC status report as a response to receiving a status request from the BS or based at least in part on expiration of a reordering timer for reordering missing protocol data units (PDUs). However, in HARQ-less transmission modes, when the UE does not have uplink data for transmission, the UE may need to send a sounding reference signal (SRS) to request uplink scheduling to transmit the RLC status report, which may result in an excessive round-trip delay (RTD).

Some aspects described herein enable downlink feedback for HARQ-less transmission modes. For example, the UE may provide downlink feedback as uplink control information in a physical uplink control channel (PUCCH) or a physical uplink shared channel (PUSCH). In this way, a BS may determine, for example, a downlink decoding rate, which may enable downlink scheduling adaptation, such as adjusting a scheduling MCS for a target BLER. Based at least in part on including the downlink feedback in the PUCCH or PUSCH, the UE may reduce a delay to provide the downlink feedback relative to using an RLC status report.

Moreover, to resolve an out of order reception issue that may occur for RLC PDUs received from a media access control (MAC) layer when operating in HARQ based transmissions, the UE may configure the reordering timer for the HARQ based transmissions. However, for HARQ-less transmission modes, if no re-transmission is scheduled by the network which is performed blindly irrespective of a decoding failure, there is no out of order reception issue. In this case, using the reordering timer can be avoided. For example, based at least in part on providing separate downlink feedback via a PUCCH or a PUSCH, the UE may set the reordering timer to a zero value or may disable the reordering timer to allow for out of order delivery of RLC PDUs, thereby enabling use of a HARQ-less transmission mode without blind re-transmission. In this way, the UE may enable improved utilization of network resources by enabling efficient downlink feedback in HARQ-less transmission modes. Moreover, based at least in part on configuring the reordering timer for the HARQ-less transmission mode, the UE reduces a likelihood of interrupted communication resulting from out of order delivery of RLC PDUs from the MAC layer.

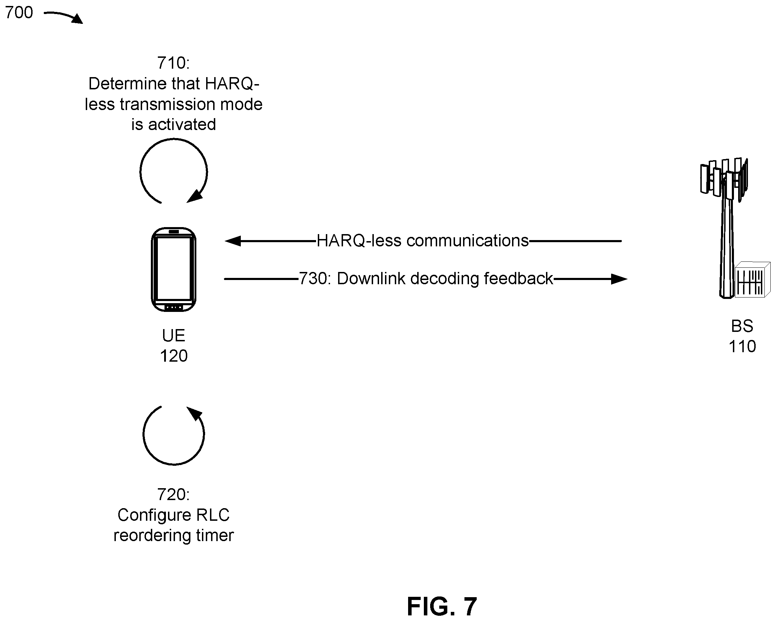

Fig. 7 is a diagram illustrating an example 700 of downlink decoding feedback for HARQ-less transmission modes, in accordance with various aspects of the present disclosure. As shown in Fig. 7, example 700 includes a BS 110 and a UE 120.

As further shown in Fig. 7, and by reference number 710, UE 120 may determine that a HARQ-less transmission mode is activated. For example, UE 120 may determine that the HARQ-less transmission mode is activated based at least in part on received signaling from BS 110 indicating that UE 120 is not to transmit HARQ ACK or HARQ NACK messages. Additionally, or alternatively, UE 120 may determine that the HARQ-less transmission mode is activated based on a stored configuration. For example, UE 120 may be preconfigured to operate in the HARQ-less transmission mode when deployed in an NTN deployment. Additionally, or alternatively, UE 120 may determine that the HARQ-less transmission mode is activated based at least in part on receiving a downlink transmission scheduled by a grant of resources that does not require the UE to transmit a HARQ ACK or HARQ NACK message.

As further shown in Fig. 7, and by reference number 720, UE 120 may configure an RLC reordering timer based at least in part on determining that the HARQ-less transmission mode is activated. For example, UE 120 may set the RLC reordering timer to a value of zero when operating in the HARQ-less transmission model and blind re-transmission is not enabled. Additionally, or alternatively, UE 120 may disable the RLC reordering timer when operating in the HARQ-less transmission mode and blind re-transmission is not enabled. In this way, UE 120 may enable reduced delay for transmissions to BS 110 identifying a decoding rate.

As further shown in Fig. 7, and by reference number 730, UE 120 may transmit downlink decoding feedback to BS 110 based at least in part on determining that the HARQ-less transmission mode is activated and as a response to receiving HARQ-less communications. For example, UE 120 may transmit the downlink decoding feedback to provide physical-layer feedback identifying a downlink decoding rate, whether a downlink transmission was successfully received and/or decoded, and/or the like. In this case, the downlink decoding feedback may enable BS 110 to determine the downlink decoding rate and perform downlink scheduling adaptation. In this way, UE 120 may enable BS 110 to adapt an uplink scheduling MCS to achieve a target BLER when the HARQ-less transmission mode is activated.

In some aspects, UE 120 may provide the downlink decoding feedback rather than an RLC status report. For example, UE 120 may forgo transmitting an RLC status report in the HARQ-less transmission mode, thereby enabling identification of channel quality with reduced overhead relative to transmitting both downlink decoding feedback and an RLC status report. Additionally, or alternatively, UE 120 may transmit both the RLC status report and the downlink decoding feedback to enable identification of both a downlink decoding rate and the channel quality. In some aspects, UE 120 may include the downlink decoding feedback in a particular type of message. For example, UE 120 may provide the downlink decoding feedback as uplink control information (UCI) in a PUCCH, a PUSCH, and/or the like. Additionally, or alternatively, UE 120 may provide the downlink decoding feedback as a medium access control (MAC) control element (CE) of a PUSCH.

In some aspects, UE 120 may provide the downlink decoding feedback as a periodic message, an aperiodic message (e.g., triggered by an indicator in a received downlink control information (DCI)), and/or a semi-persistent message (e.g., configured by RRC signaling and activated by a DCI). In some aspects, UE 120 may provide the downlink decoding feedback using an ACK or NACK but may not request retransmission, thereby enabling HARQ-less transmission mode feedback. In some aspects, UE 120 may provide the downlink decoding feedback in an RLC status report (e.g., an RLC ACK or NACK with a set of associated sequence numbers).

In some aspects, UE 120 may identify a particular set of parameters in the downlink decoding feedback. For example, UE 120 may include information identifying a quantity of decoded PDCCHs, a quantity of decoded dynamically scheduled PDSCHs, and a quantity of decoded configured PDSCHs (e.g., configured via semi-persistent scheduling (SPS)) in a particular reporting window. Additionally, or alternatively, UE 120 may include information identifying a quantity of decoded PDCCHs for which corresponding PDSCHs are not decoded and a quantity of configured PDSCHs that were not received during a particular reporting window. Additionally, or alternatively, UE 120 may include information identifying a decoded PDCCH for which a corresponding PDSCH is not decoded (e.g., UE 120 may provide downlink decoding feedback identifying NACKs). Additionally, or alternatively, UE 120 may include information identifying whether transport blocks (TBs) of a particular channel were successfully decoded, such as TBs of a PDCCH, a PDSCH, and/or the like.

In some aspects, UE 120 may determine a particular reporting window for the downlink decoding feedback. For example, UE 120 may start a reporting window after an end of a previous reporting window, and may end the reporting window a threshold quantity of slots before transmission of the downlink decoding feedback is scheduled. In this case, the threshold quantity may be determined based at least in part on a communication parameter, such as a k0 parameter (e.g., a timing between a downlink resource grant on a PDCCH and a downlink data transmission on a PDSCH), a k1 parameter (e.g., a timing between a downlink data transmission on a PDSCH and a scheduled uplink ACK/NACK on a PUCCH), a combination thereof, and/or the like. Additionally, or alternatively, UE 120 may start the reporting window a configurable amount of time prior to transmission of the downlink decoding feedback and may end the reporting window a configurable quantity of slots before transmission of the downlink decoding feedback. Additionally, or alternatively, UE 120 may start the reporting window before transmission of a previous downlink decoding feedback for a previous reporting window and may end the reporting window before transmission of a current downlink decoding feedback for a current reporting window.

As indicated above, Fig. 7 is provided as an example. Other examples may differ from what is described with respect to Fig. 7.

Fig. 8 is a diagram illustrating an example process 800 performed, for example, by a UE, in accordance with various aspects of the present disclosure. Example process 800 is an example where a UE (e.g., UE 120 and/or the like) performs operations associated with downlink decoding feedback for HARQ-less transmission modes.

As shown in Fig. 8, in some aspects, process 800 may include determining that a HARQ-less mode is activated and that blind re-transmission is enabled for communication with a BS (block 810). For example, the UE (e.g., using receive processor 258, transmit processor 264, controller/processor 280, memory 282, and/or the like) may determine that a HARQ-less mode is activated and that blind re-transmission is enabled for communication with a BS, as described above with regard to Fig. 7.

As further shown in Fig. 8, in some aspects, process 800 may include configuring a reordering timer based at least in part on the HARQ-less mode being activated and blind re-transmission being enabled for communication with the BS (block 820). For example, the UE (e.g., using receive processor 258, transmit processor 264, controller/processor 280, memory 282, and/or the like) may configure a reordering timer based at least in part on the HARQ-less mode being activated and blind re-transmission being enabled for communication with the BS, as described above with regard to Fig. 7.

Process 800 may include additional aspects, such as any single aspect or any combination of aspects described below and/or in connection with one or more other processes described elsewhere herein.

In a first aspect, determining that the HARQ-less mode is activated includes determining that the HARQ-less mode is activated based at least in part on a received indication from the BS or stored configuration information.

In a second aspect, alone or in combination with the first aspect, configuring the reordering timer includes setting an expiration time of the reordering timer to zero.

In a third aspect, alone or in combination with one or more of the first and second aspects, configuring the reordering timer includes disabling the reordering timer.

In a fourth aspect, alone or in combination with one or more of the first through third aspects, the reordering timer is a radio link control acknowledge mode reordering timer associated with transmissions of decoding rate feedback to the base station.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram illustrating an example process 900 performed, for example, by a UE, in accordance with various aspects of the present disclosure. Example process 900 is an example where a UE (e.g., UE 120 and/or the like) performs operations associated with downlink decoding feedback for HARQ-less transmission modes.

As shown in Fig. 9, in some aspects, process 900 may include determining that a HARQ-less mode is activated for communication with a BS (block 910). For example, the UE (e.g., using receive processor 258, transmit processor 264, controller/processor 280, memory 282, and/or the like) may determine that a HARQ-less mode is activated for communication with a BS, as described above with regard to Fig. 7.

As further shown in Fig. 9, in some aspects, process 900 may include transmitting a feedback message to the BS based at least in part on the HARQ-less mode being activated for communication with the BS, wherein the feedback message is a physical layer downlink decoding feedback message (block 920). For example, the UE (e.g., using receive processor 258, transmit processor 264, controller/processor 280, memory 282, and/or the like) may transmit a feedback message to the BS based at least in part on the HARQ-less mode being activated for communication with the BS, as described above with regard to Fig. 7. In some aspects, the feedback message is a physical layer downlink decoding feedback message.

Process 900 may include additional aspects, such as any single aspect or any combination of aspects described below and/or in connection with one or more other processes described elsewhere herein.

In a first aspect, determining that the HARQ-less mode is activated includes determining that the HARQ-less mode is activated based at least in part on a received indication from the BS or stored configuration information.

In a second aspect, alone or in combination with the first aspect, process 900 may include forgoing transmission of a radio link control status report based at least in part on transmitting the feedback message.

In a third aspect, alone or in combination with one or more of the first and second aspects, process 900 may include transmitting a radio link control status report in addition to transmitting the feedback message.

In a fourth aspect, alone or in combination with one or more of the first through third aspects, the feedback message is conveyed via an uplink control information message of a physical uplink control channel or a physical uplink shared channel.

In a fifth aspect, alone or in combination with one or more of the first through fourth aspects, the feedback message is conveyed via at least one of: a periodic message, an aperiodic message triggered by a downlink control information indicator, or a semi-persistent aperiodic message.

In a sixth aspect, alone or in combination with one or more of the first through fifth aspects, the feedback message includes information identifying at least one of: a quantity of decoded physical downlink control channels in a particular reporting window, a quantity of decoded dynamically scheduled physical downlink shared channel (PDSCH) TBs in the particular reporting window, a quantity of semi-persistently scheduled PDSCH TBs in the particular reporting window, a quantity of non-decoded PDSCH TBs, or a quantity of non-received PDSCH TBs.

In a seventh aspect, alone or in combination with one or more of the first through sixth aspects, the feedback message includes negative acknowledgement information identifying a non-decoded PDSCH corresponding to a decoded physical downlink control channel (PDCCH).

In an eighth aspect, alone or in combination with one or more of the first through seventh aspects, the feedback message is an acknowledgement message or negative acknowledgement message that does not include a retransmission indicator.

In a ninth aspect, alone or in combination with one or more of the first through eighth aspects, a reporting window for the feedback message is determined based at least in part on a pre-configured quantity of slots and an end of a previous reporting window corresponding to a previous feedback message.

In a tenth aspect, alone or in combination with one or more of the first through ninth aspects, the pre-configured quantity of slots is determined based at least in part on at least one of a delay between a PDCCH and a scheduled PDSCH or a delay between the scheduled PDSCH and an acknowledgement or negative acknowledgement message associated with the scheduled PDSCH.

In an eleventh aspect, alone or in combination with one or more of the first through tenth aspects, a reporting window for the feedback message is based at least in part on a scheduled transmission period for the feedback message.

In a twelfth aspect, alone or in combination with one or more of the first through eleventh aspects, the feedback message is conveyed via a medium access control control element of a physical uplink shared channel.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

The foregoing disclosure provides illustration and description, but is not intended to be exhaustive or to limit the aspects to the precise form disclosed. Modifications and variations may be made in light of the above disclosure or may be acquired from practice of the aspects.

As used herein, the term "component" is intended to be broadly construed as hardware, firmware, and/or a combination of hardware and software. As used herein, a processor is implemented in hardware, firmware, and/or a combination of hardware and software.

As used herein, satisfying a threshold may, depending on the context, refer to a value being greater than the threshold, greater than or equal to the threshold, less than the threshold, less than or equal to the threshold, equal to the threshold, not equal to the threshold, and/or the like.

It will be apparent that systems and/or methods described herein may be implemented in different forms of hardware, firmware, and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. A phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items, and may be used interchangeably with "one or more." Furthermore, as used herein, the terms "set" and "group" are intended to include one or more items (e.g., related items, unrelated items, a combination of related and unrelated items, and/or the like), and may be used interchangeably with "one or more." Where only one item is intended, the phrase "only one" or similar language is used. Also, as used herein, the terms "has," "have," "having," and/or the like are intended to be open-ended terms. Further, the phrase "based on" is intended to mean "based, at least in part, on" unless explicitly stated otherwise.

## Claims

1. A method of wireless communication performed by a user equipment, UE, comprising:
determining that a hybrid automatic repeat request, HARQ,-less mode is activated for communication with a base station, BS,
wherein the determining that the HARQ-less transmission mode is activated is based at least in part on received signaling from the BS indicating that the UE is not to transmit HARQ ACK or HARQ NACK messages; and
transmitting a feedback message to the BS based at least in part on the HARQ-less mode being activated for communication with the BS,
wherein the feedback message is a physical layer downlink decoding feedback message, and
wherein the physical layer downlink decoding feedback message provides physical-layer feedback identifying a downlink decoding rate.

2. The method of claim 1, further comprising:
forgoing transmission of a radio link control status report based at least in part on transmitting the feedback message.

3. The method of claim 1, further comprising:
transmitting a radio link control status report in addition to transmitting the feedback message.

4. The method of claim 1, wherein the feedback message is conveyed via an uplink control information message of a physical uplink control channel or a physical uplink shared channel.

5. The method of claim 1, wherein the feedback message is conveyed via a medium access control control element of a physical uplink shared channel.

6. The method of claim 1, wherein the feedback message is conveyed via at least one of:
a periodic message,
an aperiodic message triggered by a downlink control information indicator, or
a semi-persistent aperiodic message.

7. The method of claim 1, wherein the feedback message further includes information identifying at least one of:
a quantity of decoded physical downlink control channels in a particular reporting window,
a quantity of decoded dynamically scheduled physical downlink shared channel, PDSCH, TBs in the particular reporting window,
a quantity of semi-persistently scheduled PDSCH TBs in the particular reporting window,
a quantity of non-decoded PDSCH TBs, or
a quantity of non-received PDSCH TBs.

8. The method of claim 1, wherein the feedback message includes negative acknowledgement information identifying a non-decoded physical downlink shared channel, PDSCH, corresponding to a decoded physical downlink control channel ,PDCCH.

9. The method of claim 1, wherein the feedback message is an acknowledgement message or negative acknowledgement message that does not include a retransmission indicator.

10. The method of claim 1, wherein a reporting window for the feedback message is determined based at least in part on a pre-configured quantity of slots and an end of a previous reporting window corresponding to a previous feedback message.

11. The method of claim 10, wherein the pre-configured quantity of slots is determined based at least in part on at least one of a delay between a physical downlink control channel, PDCCH, and a scheduled physical downlink shared channel, PDSCH, or a delay between the scheduled PDSCH and an acknowledgement or negative acknowledgement message associated with the scheduled PDSCH.

12. The method of claim 1, wherein a reporting window for the feedback message is based at least in part on a scheduled transmission period for the feedback message.

13. A user equipment, UE, for wireless communication, comprising:
means for determining that a hybrid automatic repeat request, HARQ,-less mode is activated for communication with a base station, BS,
wherein the determining that the HARQ-less transmission mode is activated is based at least in part on received signaling from the BS indicating that the UE is not to transmit HARQ ACK or HARQ NACK messages; and
means for transmitting a feedback message to the BS based at least in part on the HARQ-less mode being activated for communication with the BS, wherein the feedback message is a physical layer downlink decoding feedback message, and
wherein the physical layer downlink decoding feedback message provides physical-layer feedback identifying a downlink decoding rate.

14. A computer program comprising instructions which, when the program is executed by a computer, cause the computer to perform the method according to one of claims 1-12.

## Patentansprüche

1. Verfahren zur drahtlosen Kommunikation, das von einem Benutzergerät, UE, durchgeführt wird, umfassend:
Bestimmen, dass ein Hybrid Automatic Repeat Request, HARQ,-loser Modus zur Kommunikation mit einer Basisstation, BS, aktiviert ist,
wobei das Bestimmen, dass der HARQ-lose Übertragungsmodus aktiviert ist,
zumindest teilweise auf empfangener Signalisierung von der BS basiert, die anzeigt, dass das UE keine HARQ-ACK- oder HARQ-NACK-Nachrichten übertragen soll; und
Übertragen einer Rückmeldungsnachricht an die BS basierend zumindest teilweise darauf, dass der HARQ-lose Modus zur Kommunikation mit der BS aktiviert ist,
wobei die Rückmeldungsnachricht eine Downlink-Decodierungsrückmeldungsnachricht der physikalischen Schicht ist, und
wobei die Downlink-Decodierungsrückmeldungsnachricht der physikalischen Schicht Rückmeldung der physikalischen Schicht bereitstellt, die eine Downlink-Decodierungsrate identifiziert.

2. Verfahren nach Anspruch 1, ferner umfassend:
Verzichten auf Übertragung eines Funkverbindungssteuerungsstatusberichts basierend zumindest teilweise auf Übertragen der Rückmeldungsnachricht.

3. Verfahren nach Anspruch 1, ferner umfassend:
Übertragen eines Funkverbindungssteuerungsstatusberichts zusätzlich zum Übertragen der Rückmeldungsnachricht.

4. Verfahren nach Anspruch 1, wobei die Rückmeldungsnachricht über eine Uplink-Steuerungsinformationsnachricht eines physikalischen Uplink-Steuerungskanals oder eines gemeinsam genutzten physikalischen Uplink-Kanals übermittelt wird.

5. Verfahren nach Anspruch 1, wobei die Rückmeldungsnachricht über ein Medienzugriffssteuerung Steuerungselement eines gemeinsam genutzten physikalischen Uplink-Kanals übermittelt wird.

6. Verfahren nach Anspruch 1, wobei die Rückmeldungsnachricht über mindestens eines von Folgendem übermittelt wird:
eine periodische Nachricht,
eine aperiodische Nachricht, die durch einen Downlink-Steuerungsinformationsindikator ausgelöst wird, oder
eine semipersistente aperiodische Nachricht.

7. Verfahren nach Anspruch 1, wobei die Rückmeldungsnachricht ferner Information beinhaltet, die mindestens eines von Folgendem identifiziert:
eine Menge von decodierten physikalischen Downlink-Steuerungskanälen in einem bestimmten Berichtsfenster,
eine Menge von decodierten dynamisch geplanten TBs eines gemeinsam genutzten physikalischen Downlink-Kanals, PDSCH, in dem bestimmten Berichtsfenster,
eine Menge von semipersistent geplanten PDSCH-TBs in dem bestimmten Berichtsfenster,
eine Menge von nicht decodierten PDSCH-TBs, oder
eine Menge von nicht empfangenen PDSCH-TBs.

8. Verfahren nach Anspruch 1, wobei die Rückmeldungsnachricht negative Bestätigungsinformation beinhaltet, die einen nicht decodierten gemeinsam genutzten physikalischen Downlink-Kanal, PDSCH, identifiziert, der einem decodierten physikalischen Downlink-Steuerungskanal, PDCCH, entspricht.

9. Verfahren nach Anspruch 1, wobei die Rückmeldungsnachricht eine Bestätigungsnachricht oder negative Bestätigungsnachricht ist, die keinen Neuübertragungsindikator beinhaltet.

10. Verfahren nach Anspruch 1, wobei ein Berichtsfenster für die Rückmeldungsnachricht basierend zumindest teilweise auf einer vorkonfigurierten Menge von Schlitzen und einem Ende eines vorherigen Berichtsfensters bestimmt wird, das einer vorherigen Rückmeldungsnachricht entspricht.

11. Verfahren nach Anspruch 10, wobei die vorkonfigurierte Menge von Schlitzen basierend zumindest teilweise auf zumindest einem von einer Verzögerung zwischen einem physikalischen Downlink-Steuerungskanal, PDCCH, und einem geplanten gemeinsam genutzten physikalischen Downlink-Kanal, PDSCH, oder einer Verzögerung zwischen dem geplanten PDSCH und einer Bestätigungs- oder negativen Bestätigungsnachricht, die mit dem geplanten PDSCH assoziiert ist, bestimmt wird.

12. Verfahren nach Anspruch 1, wobei ein Berichtsfenster für die Rückmeldungsnachricht zumindest teilweise auf einer geplanten Übertragungsperiode für die Rückmeldungsnachricht basiert.

13. Benutzergerät, UE, zur drahtlosen Kommunikation, umfassend:
Mittel zum Bestimmen, dass ein Hybrid Automatic Repeat Request, HARQ,-loser Modus zur Kommunikation mit einer Basisstation, BS, aktiviert ist,
wobei das Bestimmen, dass der HARQ-lose Übertragungsmodus aktiviert ist,
zumindest teilweise auf empfangener Signalisierung von der BS basiert, die anzeigt, dass das UE keine HARQ-ACK- oder HARQ-NACK-Nachrichten übertragen soll; und
Mittel zum Übertragen einer Rückmeldungsnachricht an die BS basierend zumindest teilweise darauf, dass der HARQ-lose Modus zur Kommunikation mit der BS aktiviert ist, wobei die Rückmeldungsnachricht eine Downlink-Decodierungsrückmeldungsnachricht der physikalischen Schicht ist, und
wobei die Downlink-Decodierungsrückmeldungsnachricht der physikalischen Schicht Rückmeldung der physikalischen Schicht bereitstellt, die eine Downlink-Decodierungsrate identifiziert.

14. Computerprogramm, umfassend Anweisungen, die, wenn das Programm von einem Computer ausgeführt wird, den Computer veranlassen, das Verfahren nach einem der Ansprüche 1-12 durchzuführen.

## Revendications

1. Un procédé de communication sans fil réalisé par un équipement utilisateur, UE, comprenant :
la détermination qu'un mode sans requête de répétition automatique hybride, HARQ, est activé pour la communication avec une station de base, BS,
dans lequel la détermination que le mode de transmission sans HARQ est activé est basée au moins en partie sur une signalisation reçue à partir de la BS indiquant que l'UE ne doit pas transmettre de messages HARQ ACK ou HARQ NACK ; et
la transmission d'un message de retour à la BS sur la base au moins en partie du mode sans HARQ qui est activé pour la communication avec la BS,
dans lequel le message de retour est un message de retour de décodage de liaison descendante de couche physique, et
dans lequel le message de retour de décodage de liaison descendante de couche physique délivre un retour de couche physique identifiant un taux de décodage de liaison descendante.

2. Le procédé selon la revendication 1, comprenant en outre :
l'abandon de la transmission d'un rapport d'état de contrôle de liaison radio sur la base au moins en partie de la transmission du message de retour.

3. Le procédé selon la revendication 1, comprenant en outre :
la transmission d'un rapport d'état de contrôle de liaison radio, en plus de la transmission du message de retour.

4. Le procédé selon la revendication 1, dans lequel le message de retour est transmis via un message d'information de contrôle de liaison montante d'un canal physique de contrôle de liaison montante ou d'un canal physique partagé de liaison montante.

5. Le procédé selon la revendication 1, dans lequel le message de retour est transmis via un élément de contrôle de contrôle d'accès au support d'un canal physique partagé de liaison montante.

6. Le procédé selon la revendication 1, dans lequel le message de retour est transmis via au moins un parmi :
un message périodique,
un message apériodique déclenché par un indicateur d'information de contrôle de liaison descendante, ou
un message apériodique semi-persistant.

7. Le procédé selon la revendication 1, dans lequel le message de retour inclut en outre des informations identifiant au moins une parmi :
une quantité de canaux physiques de contrôle de liaison descendante décodés dans une fenêtre de rapport particulière,
une quantité de TB de canal partagé physique de liaison descendante, PDSCH, planifiés dynamiquement décodés dans la fenêtre de rapport particulière,
une quantité de TB PDSCH planifiés de manière semi-persistante dans la fenêtre de rapport particulière, une quantité de TB PDSCH non décodés, ou
une quantité de TB PDSCH non reçus.

8. Le procédé selon la revendication 1, dans lequel le message de retour inclut des informations d'accusé de réception négatif identifiant un canal physique partagé de liaison descendante, PDSCH, non décodé correspondant à un canal physique de contrôle de liaison descendante physique, PDCCH, décodé.

9. Le procédé selon la revendication 1, dans lequel le message de retour est un message d'accusé de réception ou un message d'accusé de réception négatif qui n'inclut pas d'indicateur de retransmission.

10. Le procédé selon la revendication 1, dans lequel une fenêtre de rapport pour le message de retour est déterminée sur la base au moins en partie d'une quantité préconfigurée de slots et d'une fin d'une fenêtre de rapport précédente correspondant à un message de retour précédent.

11. Le procédé selon la revendication 10, dans lequel la quantité préconfigurée de slots est déterminée sur la base au moins en partie d'au moins un parmi un retard entre un canal physique de contrôle de liaison descendante, PDCCH, et un canal physique partagé de liaison descendante, PDSCH, planifié, ou un retard entre le PDSCH planifié et un message d'accusé de réception ou d'accusé de réception négatif associé au PDSCH planifié.

12. Le procédé selon la revendication 1, dans lequel une fenêtre de rapport pour le message de retour est basée au moins en partie sur une période de transmission planifiée pour le message de retour.

13. Un équipement utilisateur, UE, pour la communication sans fil, comprenant :
un moyen pour déterminer qu'un mode sans requête de répétition automatique hybride, HARQ, est activé pour la communication avec une station de base, BS,
dans lequel la détermination que le mode de transmission sans HARQ est activé est basée au moins en partie sur une signalisation reçue à partir de la BS indiquant que l'UE ne doit pas transmettre de messages HARQ ACK ou HARQ NACK ; et
un moyen pour transmettre un message de retour à la BS sur la base au moins en partie du mode sans HARQ qui est activé pour la communication avec la BS, dans lequel le message de retour est un message de retour de décodage de liaison descendante de couche physique, et dans lequel le message de retour de décodage de liaison descendante de couche physique délivre un retour de couche physique identifiant un taux de décodage de liaison descendante.

14. Un programme de calculateur comprenant des instructions qui, lorsque le programme est exécuté par un calculateur, amènent le calculateur à réaliser le procédé selon l'une des revendications 1 à 12.
